# EUROPEAN PATENT SPECIFICATION

(11) **EP 0 402 909 B1**
(45) Date of publication and mention of the grant of the patent: **04.08.1993**
(21) Application number: 90111224.3
(22) Date of filing: 13.06.1990
(51) Int. Cl.: C25B 9/00, F16J 15/06, F16L 23/16

(54) **Gaskets for filter press type cells**
Dichtungen für Filterpress-Typ-Zellen
Joints d'étanchéité pour cellules du type filtre-presse

(30) Priority: 14.06.1989 US 366806; 14.06.1989 US 366810
(43) Date of publication of application: 19.12.1990
(73) Proprietor: THE DOW CHEMICAL COMPANY, Midland, Michigan 48640 (US)
(72) Inventor: Dang, Hiep D., Lake Jackson, Texas 77566 (US); Pimlott, John R., Sweeny, Texas 77480 (US); Beaver, Richard Neal, Angleton, Texas 77515 (US); McMichael, James Williams, Lake Jackson, Texas 77515 (US)
(74) Representative: Huber, Bernhard, Dipl.-Chem.

(56) References cited:
- EP-A- 0 261 827
- EP-A- 0 276 350

## Description

The present invention relates to a gasket for use in a filter press type electrolytic cell. More particularly, the invention relates to laminated gaskets which contain a plurality of projecting pointed pegs or pins for removably attaching the gaskets to flat surfaces of adjacent electrolytic cell members for sealing the cell. The gaskets of this invention can be applied to flat surfaces of liners of adjacent electrode frame members or directly onto the electrode frame members for sealing a separator between adjacent electrode frame members in a filter press type electrolytic cell. The gaskets comprise a seal material on each side of an inner reinforcement layer, with pointed pegs or pins protruding normally (i.e., at right angles) from one side of the gasket.

Electrolytic cells of the filter press type, for example, for the production of chlorine and alkali metal hydroxides, generally comprise alternating electrode frame members, anodes and cathodes, of a flat plate type structure. Such filter press type cells utilize separators, generally in sheet form, which are clamped between the sides of the frame members.

Separator materials which are typically used in filter press type cells for the production of chlorine and alkali metal hydroxides include, for example, membranes marketed by E.I. duPont de Nemours and Company under the trademark Nafion™ and by Asahi Glass Company Ltd. under the trademark Flemion™. Separators are used to separate anodic compartments from cathodic compartments and can range from hydraulically permeable "diaphragms", to semipermeable and impermeable "membranes".

Typically, the gaskets employed in the filter press type cells positioned between the cell frame members to seal the cell are gaskets generally of a picture frame configuration and rectangular in cross-section and are adhered, for example with a known adhesive, to flange faces of the frame members. It has been found, however, that during cell operation, every known adhesive is attacked by the cell's corrosive electrolyte, such as chlorine or hot caustic, and the adhesives can lose their adhesion properties when in contact with the electrolytic cell environment.

The electrolytic cells may employ gaskets made of elastomeric material, for example, a polychloroprene such as Neoprene™, butyl rubber, styrene-butadiene rubber, silicone rubber, ethylene propylene diene (EPDM), and the like, or polymeric material, for example, polytetrafluoroethylene (PTFE), fluorinated ethylene/propylene copolymer (FEP) and perfluoroalkoxy resin (PFA) which are known to be more corrosion resistant and non-contaminating materials than the elastomeric material. A gasket material described in U.S. Patent 4,610,765 can be a tape of a porous expanded PTFE material sold under the tradename Gore-Tex™.

The gaskets employed in the cells must effectively provide a fluid-tight seal between the frame members and the separator without damaging the separator. A separator can be damaged due to a gasket deforming during compression of the frame members and gasket employed on adjacent electrode frame members into a fluid-tight cell. Frequently, hydraulic rams or other types of pressure applying apparatuses are employed to compress the electrode frames, the separator and gasket together. Since electrolytic cells of the filter press type may comprise a large number of alternating anodes and cathodes and a plurality of gaskets, difficulty may be experienced during the assembly of the cell in accurately positioning the gaskets, securely fastening the gaskets to the frame members and fixedly maintaining the gaskets in position when they are subjected to gasket compression forces.

Additionally, if the gaskets employed are not properly aligned, slippage can occur resulting in unequal stress on, and tearing of, the membrane. An unequal distribution of the compressive loads on the gaskets can also result in electrolyte leaks. The undesired slippage or "oozing out" of the gaskets on the slippery surface of the separator or membrane and of the gasket flanges are more likely to occur in electrolytic cells which are operated at high temperatures, for example 80° to 100° C, and elevated pressures, for example 34.5 to 207 kilopascals(kPa), particularly in electrolytic cells where one of the electrolytes is a caustic solution and the gaskets used are made from elastomeric or rubber materials.

It is known that such elastomeric materials are not very resistant to the corrosive atmosphere of the anode compartment where the brine, wet chlorine gas, hypochlorites and chlorates at a temperature of from 80 to 100° C and pressure from ambient to 207 kPa tend to corrode rubber gaskets. Elastomeric materials are, however, usually preferred over polymeric materials since the elastomeric gaskets usually require less sealing pressure than the polymeric gaskets. Elastomeric materials, for example, normally require sealing pressures in the range of from 344 to 3440 kPa while polymeric gaskets normally require a sealing pressure of from 1379 to 6895 kPa. Thus, less compression force can be employed with the elastomeric gaskets, thus reducing the chance of stretching and tearing the membrane and also permitting the use of smaller compression means to reduce cell costs.

U.S. Patent No. 4,175,025 describes filter press frames having at least one recess for fitting a gasket therein. This method of gasket assembly seems to be effective against slippage but requires relatively expensive and complex machining operations to provide recesses in the cell frames. The complex machining operations add undesirable increases to the cost of fabricating electrolytic cells.

In some cell fabrication processes, to save costs, the cell frame is made of inexpensive, non-chemical resistant materials such as steel or ductile iron, which is covered with a thin liner made of a corrosion resistant material such as titanium or nickel to protect the cell frame material. In this type of cell manufacture, it is still relatively expensive and difficult to provide dimensionally accurate recesses in the thin liners for fitting a gasket therein.

U.S. Patent No. 4,493,759 discloses an electrolytic cell using gaskets as the sealing means, characterized in that the gaskets comprise a plurality of projections and/or recesses on or in a surface thereof adapted to cooperate with corresponding recesses and/or projections in or on a surface of an anode or cathode or a gasket adjacent thereto.

The gaskets described have projections which fit into recesses and also have recesses which fit over projections on an electrode and also on an adjacent gasket. A disadvantage of this system is that each of the mesh electrodes described there requires two gaskets, each gasket having projections and recesses, one on each side of the mesh electrode for proper sealing. Another disadvantage is that when the portion of the electrode in contact with the gaskets has a mesh surface, e.g. woven mesh or expanded mesh, and the mesh is thick, a fluid-tight seal may not be obtained between the mesh surface and the gasket, thus resulting in fluid leaks. Leakage of electrolyte, of course, is undesirable because leakage of the electrolyte can damage the external structure of the cell and such leakage is a potential hazard to operating personnel. Leaks can also cause loss of cell efficiency and require shutdown of the cell's operation.

It is desired to provide a gasket which can prevent undesired slippage between the gasket and the slippery surfaces of the separator and of the sealing flanges which are generally wet with electrolytes, such as caustic solution, at high temperatures and elevated pressures.

It is also desired to provide an electrolytic cell, and a gasket for use in the cell in which, during assembly of the cell and during use of the cell, the gaskets can be readily assembled and maintained in a predetermined position in an electrolytic cell.

It is further desired to provide a reinforced gasket which has projecting pointed pegs or pins which fit into corresponding recesses or holes on the periphery of a cell frame liner and outside the cell frame member body.

The gasket of the invention is surprisingly effective in providing a good seal, even when in contact with slippery surfaces, which is not readily attacked by the aggressive environment in an electrolytic cell, and which is easily installed and retained in proper position during, and after, the compressing stage which assembles the cell members into sealing arrangement for operation as an electrolytic cell.

Generally, the present invention is directed to a laminated gasket for sealing adjacent generally flat members comprising a solid body in flat picture frame configuration with a plurality of pointed pegs or pins projecting generally normal, i.e., at right angles, to said body. The laminated gasket comprises at least two layers of sealing material with an inner layer of a reinforcement material. The gasket is advantageously coated with a corrosion resistant material which makes the gasket useful for either the catholyte or anolyte compartment, or both compartments, of an electrolysis cell. Preferably, the pegs or pins are comprised of a material which is more rigid than the material used as the sealing material.

The present invention is also generally directed to an electrolytic cell comprising adjacent electrolytic cell frame members, a separator interposed between the frames and at least one laminated gasket member having an inner layer of reinforcement material comprising a solid body in flat picture frame configuration with a plurality of projecting pointed pegs or pins extending generally normal to said body. Each cell frame member can be advantageously and appropriately covered by a liner which is suitable for preventing cell liquids from contacting the cell frame member or for performing as part of the electrode surface of that portion of the cell.

More specifically, the present invention resides in a gasket for sealing adjacent flat members of an electrolytic cell, at least one of the flat members being a cell separator and the other being a cell frame member, or a liner for the cell frame member, the gasket comprising a one-piece laminated structure of a picture frame configuration, having at least two layers of a polymeric sealing material, or an elastomeric sealing material, and a reinforcing scrim material interposed therebetween, and a plurality of pointed pegs or pins projecting in a direction generally normal from the gasket structure for mating with holes in the cell frame member or the cell frame liner.

Additionally, the present invention resides in an electrolysis cell assembly comprising at least a pair of adjacent electrolytic cell frame members, a separator interposed between the electrode frame members, at least one cell frame member having recesses for receiving projections; and at least one laminated, reinforced gasket comprising a solid structure in picture frame configuration said gasket comprising at least two layers of a polymeric material or an elastomeric material adhered to a scrim laminated between them,and a plurality of projecting pointed pegs extending in a direction generally normal to said solid body, with the pegs or pins mating with the recesses of the cell frame member.

A specially-designed method and molding apparatus is described for producing laminated, reinforced gaskets having pointed pegs or pins extending normally, i.e., at right angles, to the plane of the flat picture frame configuration of the gasket. The following is a brief description of the drawings, none of which are drawn to any particular scale.

Figure 1 is a perspective view showing one embodiment of a laminated reinforced gasket of the present invention, having pointed pegs or pins projecting normally from the gasket.

Figure 2 is a cross-sectional view taken along line 2-2 of Figure 1.

Figure 3 is an expanded cross-section view showing of a cell assembly employing the gasket of the present invention.

Figure 4 is an expanded cross-section view showing another embodiment of a cell assembly of the present invention.

Figure 5 is an expanded cross-section view of another embodiment to a cell assembly to demonstrate the use of the gasket on each side of the cell separator. Optionally, insulation is provided on the outside of the cell structure.

Figure 6 is an expanded, cross-section view showing a gasket mold with a gasket of the present invention being assembled therein.

Figure 7 is an expanded, cut-away, cross-section view of a cell assembly.

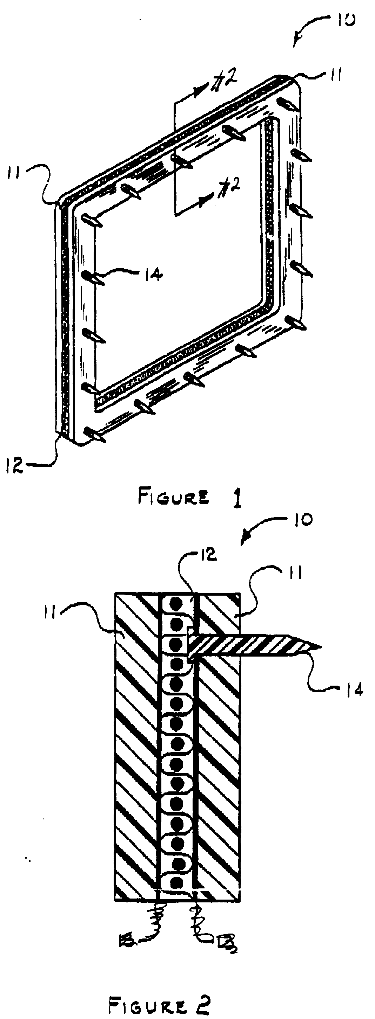

With particular reference to Figures 1 and 2, there is shown one embodiment of the present invention including a one-piece laminated composite gasket, generally designated by reference numeral 10, having at least two layers of a polymeric material 11 and at least one layer of a reinforcing material 12 interposed between the two polymeric layers 11. The layers 11 and reinforcing material 12 are bonded or otherwise attached to each other with an adhesive 13. The gasket 10, in this instance, is generally of a picture frame configuration with the layers 11 having a flat surface and a rectangular shape in cross-section. A plurality of pointed pegs or pins 14 extend in a direction normal or transversely from the flat surface of the reinforced gasket.

The polymeric material layers 11 can be any porous substrate material which is compressible or deformable to some degree, yet have some resilience for sealability. The material 11 should be chemically stable at the temperature and pressure of fabrication and use. Preferably, the material 11 is fluorinated polymeric material and preferably has a closed cell porosity. Examples of a fluorinated polymeric material may be polytetrafluoroethylene (PTFE), polyvinyl fluoride, polyvinylidene fluoride, fluorinated ethylenepropylene copolymer (FEP), tetra-fluoroethylene-hexafluoropropyl copolymer, perfluoroalkoxy resin (PFA) and the like. Most preferably, the fluorocarbon polymer material layers 11 are a polytetrafluoroethylene (PTFE) material, for example, a porous expanded PTFE sold as Gore-Tex™ by W.L. Gore & Associates, Inc. of Elkton, Md. The layer 11 may also be in the form of a substrate having an outer layer or surface of any of the fluorinated polymeric materials above.

The reinforcement material 12 can be in the form of a screen, cloth or woven fabric, or scrim made of, preferably, a PTFE such as Teflon™ (a trademark of E.I. DuPont De Nemours and Company) threads. A suitable fabric is described in U.S. Patent No. 4,650,711.

The pointed pegs or pins 14 are substantially rigid and can be made of a synthetic resinous material, especially a fluoropolymer or other sturdy polymer which is more rigid than the sealing material through which the pegs or pins protrude. These types of pegs or pins are found to be more easily and readily employed as a means for not only holding the cell members in proper alignment, but also to help guide the members into place during assembly. Projections which are not pointed, at least to some extent, and which may not all be aligned exactly with their matching holes can make cell construction difficult and can cause damage to cell members during assembly. The pointed pegs or pins, cooperating snugly with holes in a cell frame member, can be used as "snap-on pins" for holding the gasket in place as one step in the process of assembling the cell members.

The adhesive or glue 13 used in bonding the layers 11 to the reinforcement screen 12 is preferably a sulfonic polymer glue or polymer binder material such as described in U.S. Patent Application No. 350,073, entitled "Composition For Preventing Crevice Corrosion", filed May 9, 1989, by H. Burney et al, referred to here for the polymer binder material it teaches. The polymer binder material is preferably used in its thermoplastic form.

In carrying out one method of fabricating the gasket 10 of the present invention, an adhesive, e.g. a the polymeric glue is first applied between the layers 11 and reinforcement material 12. The adhesive can be applied to one side of the layers 11 or, alternatively, to both sides of reinforcement scrim 12, by conventional application techniques such as brushing.

In another embodiment, the individual threads or strands which make up the reinforcement material 12 may be individually coated with the adhesive by dipping the threads into a container filled with the adhesive and thereafter weaving or otherwise forming the threads into a cloth, scrim or mesh configuration.

The polymeric layers 11 and reinforcement material 12 coated with the adhesive are compressed together and, preferably, are heated to bond the elements 11 and 12 together. The compression is carried out to provide greater intimate contact between the surface area of the layers 11 and the reinforcement material 12. The compression can be at a pressure of from 7 to 2068 kPa, preferably from 344 to 2068 kPa, and more preferably from 688 to 1376 kPa.

The polymeric layers 11 and reinforcement material 12 are heated to a temperature sufficient to melt flow or activate the adhesive, generally at a temperature in the range of from super-ambient to 260° C, preferably from 93° to 260° C, and more preferably from 93° to 150° C. The heating and compression of the layers 11 and material 12 can be carried out by any conventional means such as between a pair of heated flat platens on a hydraulic press. The heating and compression should be carried out in a manner which avoids permanently deforming or decomposing the layers 11 or material 12.

If desired, gaskets of construction which are generally similar to Figures 1 and 2 can also be prepared by using additional polymeric layers 11 and reinforcing material 12, particularly for gaskets wherein the polymeric layer and reinforcing material are sequentially alternated, and where the sequence begins and ends with a polymeric layer.

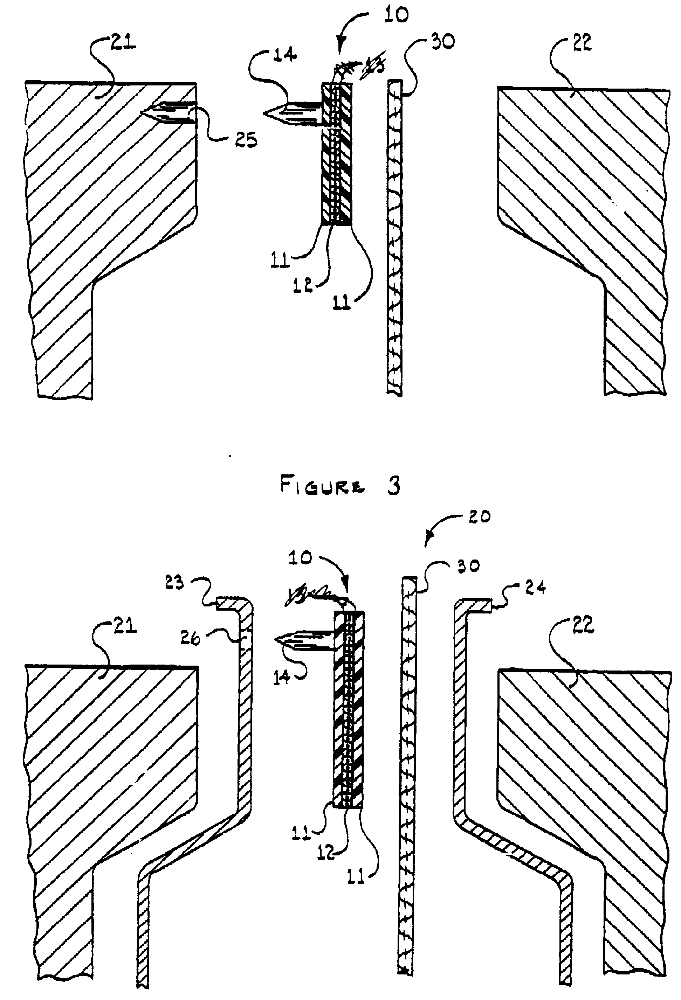

With reference to Figure 3, there is shown an electrolytic cell assembly including a laminated gasket of the present invention (such as shown in Figures 1 and 2) and a separator 30 interposed between a pair of adjacent electrode frame cell bodies 21 and 22. Preferably, the gasket 10 comprises two or more layers of Gore-Tex™ tape 11 and one or more layers of Teflon™ screen 12 adhered to each other with a polymer glue. In this instance, there is shown one gasket 10 interposed between frame 21 and separator 30. It is understood that, in another embodiment, an identical gasket 10 can also be positioned between the separator 30 and cell frame body 22. In the embodiment of Figure 3, the pegs 14 mate with holes 25 in cell frame 21.

In another embodiment illustrated in Figure 4, a pair of liners 23 and 24 can be used on each side of a separator 30 and gasket 10 interposed between cell frame members 21 and 22. It will be noted that hole 26 is provided in liner 23 for receiving the pointed peg or pin 14.

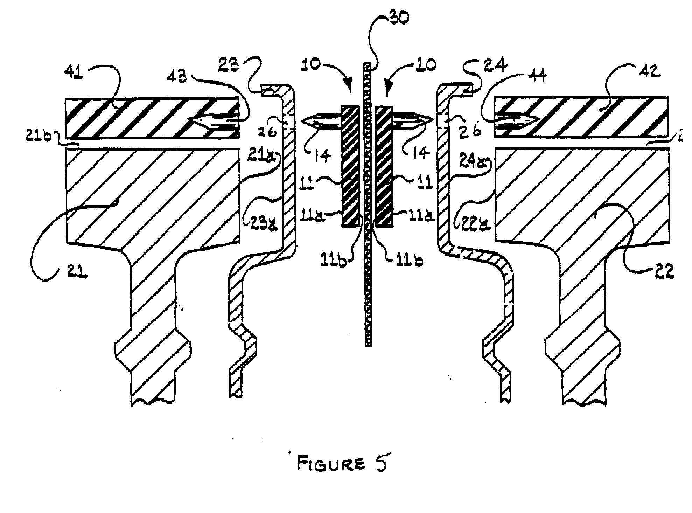

In yet another embodiment as shown in Figure 5, a pair of gaskets 10 are placed back-to-back against separator 30 and the pointed pegs or pins 14 of each of the gaskets mate with holes 26 in each of the liners 23 and 24, respectively. Upon compressing the parts into an integral cell compartment, the pointed pegs or pins will protrude through their mating liners and will be positioned outside the cell members 21 and 22.

Optionally insulation means 41 and 42 can be provided on the outside of the cell structure. The insulation means contains holes 43 and 44, respectively, into which the pointed pegs or pins 14 passing through holes 26 in the liners 23 and 24 will be inserted upon compression of the parts into an integral structure. The insulation means is beneficial in many instances, not only for aiding efficiency of operation, but also for safety of persons who may come into contact with the cells during their operation in electrolytic processes. In this embodiment, the same pegs or pins which are beneficial in proper assembly of the gaskets are also beneficial in the installation of insulation on the outside of the cell structure.

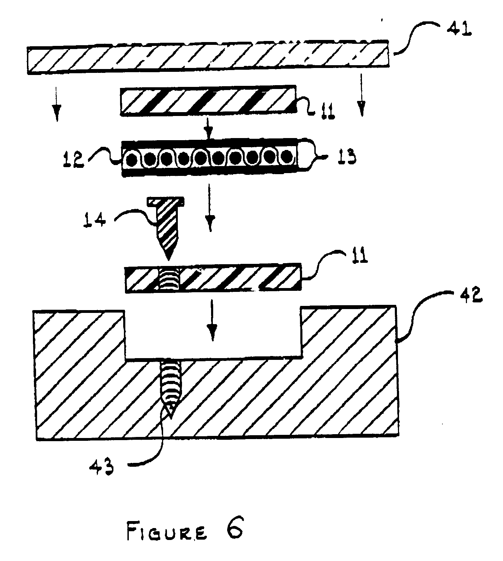

In carrying out one embodiment for producing the laminated, reinforced gasket 10 with snap-on pins, a mold 40 as shown in Figure 6 is used. In the expanded view Gore-Tex™ tape 11, Teflon™ screen 12 provided with layers of a polymeric glue 13 in opposite side thereof, and snap-on pins 14 are assembled in the mold 40 of the size and shape of the required gasket. The mold 40 includes top member 41 and bottom member 42 which are compressed and heated together with the elements 11, 12, 13 and 14 to form gasket 10. Holes 43 are provided in mold portion 42 for receiving the pegs 14. The mold 40 is clamped together and the composite gasket 10 is compressed to a precompression thickness suitable for subsequent compression upon installation in a cell. The mold 40 is heated to obtain proper bonding between the layers of tape 11 and the screen 12.

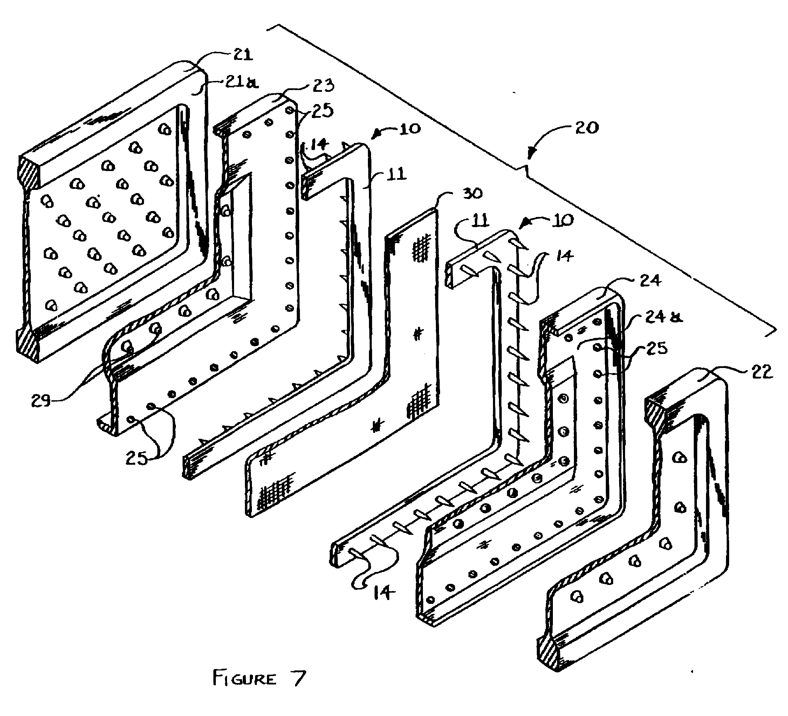

Figure 7 is a cell assembly, generally denoted by the reference numeral 20. The cell comprises the confined area of a cathode compartment and an anode compartment as defined by a separator between an anode and a cathode, the separator being held in place by gaskets of the present invention when the parts are assembled by being compressed into a cell integral structure. The extreme parts 21 and 22 are cell frame members, with liner 23 lining frame member 21 and liner 24 lining frame member 22. A gasket 10, with its projecting pegs or pins mates with each of the liners through holes provided in the liners. Separator 30 becomes compressed into place between the gaskets 10 upon assembly of the cell. Not shown, though understood by practitioners of these arts as being needed to complete the parts needed for operation of the cell as an electrolytic cell, are the means for carrying appropriate reactants into the cell compartments on each side of the separator, means for removing electrolysis products, and means for applying electric power to the electrodes. It will also be understood by practitioners of these arts that a plurality of these cells can be arranged in a bank of cells aligned in series and operated in manifold fashion.

It is preferred to coat appropriate surfaces of gasket 10 with a low temperature crevice-corrosion-preventing "paint" disclosed in U.S. Patent Application Serial No. 350,073 entitled "Composition For Preventing Crevice Corrosion", filed May 9, 1989, by H. Burney et al., for the crevice corrosion composition it teaches. The corrosion composition preferably comprises a dispersion of a fluoropolymer and ruthenium oxide which, when dried or cured, provides good corrosion resistance for titanium in the crevices of the sealed areas. The composition is particularly beneficial when the gasket 10 is used as an anode gasket in the anolyte compartment of an electrolysis cell to prevent titanium crevice corrosion in the seal areas.

The corrosion coating on the anode gasket eliminates the need for applying such coating on liner comprising a Ti pan flange, a process which is labor consuming and can cause bow, warpage, or twist of the pan flanges due to the high temperature baking in an oven. The coated gasket can then be installed on the anode side of a cell having the top layer of the Ti liner extending outside the cell frame member, such as in Figure 4. The Ti liner portion which is within the "picture" area sealed off by the picture frame gasket serves as part of anodic electrode. This design provides good support for the membrane, provides an active electrode surface all the way to the inside edge of the gasket, and avoids damage to the separator when compressed into place. Without the gasket, the hard Ti metal can damage the separator when tightly compressed. Also, it is the area with the sealed faces where crevice corrosion can occur if no anti-crevice corrosion coating is applied.

The laminated, reinforced Gore-Tex™ gasket 10 of the present invention has many advantages over the Gore-Tex™ gasket described in U.S Patent No. 4,610,765, for example, gasket 10 can be fabricated on a production scale to the required size for ready installation on a particular production size cell. Gasket 10 will have uniform thickness and hardness. Use of the gasket 10 of the present invention avoids having to overlap corners of a tape formed of the Gore-Tex™ gasket made in the field as done in the prior art. As done in the prior art, the overlapped corners of a Gore-Tex™ tape, when installed in a cell, form areas in the gasket which are too thick for proper uniform gasket compression.

The embodiment of the present invention using snap-on pins 14 on the gasket 10 has the advantage of retaining the gasket on the electrolytic cell flange, or on the liner, whichever embodiment is used. Installation and replacement of gaskets 10, in this instance, are no longer labor consuming since no adhesive is needed to attach the gasket onto the cell flange or the liner.

The reinforcing Teflon™ screen 12 between layers of Gore-Tex™ tapes 11 can prevent the gasket from stretching and damaging the membrane or from slipping outwardly off the gasket flanges. The gasket thickness and, consequently, the electrode gap between two adjacent cells will be constant and uniform during cell operation. This condition is particularly critical, for example, in zero gap type electrolytic cells since an over-compressed zero gap package could cause obstruction to gas circulation, high cell voltage and membrane damage. When compressing cell components during assembly, even small variances in the thicknesses of compressed gaskets from one cell component to the next, can have a substantial and harmful effect, either on cell efficiency and or operational longevity.

The projections 14 on the gaskets 10 and the corresponding mating holes in the other cell members should be distributed as to provide the desired result of accurate positioning of the gasket during assembly of the electrolytic cell and should ensure that the gasket remains in its predetermined position in the cell during cell assembly and operation. In general, the projections and holes will be spaced apart by no more than 25cm and they may even be spaced apart by as little as 2.5cm. However, these suggested spacings are intended to serve as a general guide and they are not intended to be limiting.

The thickness of the gasket will affect the electrode to electrode spacing gap of the electrolytic cell, just as the design of the cell frame members and/or liners and thickness of the separators will affect the size of the gap between electrodes. The thickness of the gasket 10 is also not critical, but a suitable thickness should be selected for ease of manufacture of the gasket used and for the making of uniform thicknesses for all the gaskets needed to all the cell components. For example, an elastomeric gasket member having a thickness in the range of from 1.5mm to 25mm is generally suitable.

The pointed pegs or pins should protrude from the surface of the gasket by an amount sufficient to achieve the desired result of accurately positioning the gasket during the assembly of the electrolytic cell and should ensure that the gasket remains in its predetermined position in the cell during the assembly and use of the cell. It is preferred that the projections form a relatively tight fit in the holes with which they cooperate, but not so tight as to cause any deformations of the surface sought to be sealed.

The gasket member 10 of the present invention should be made of an electrically insulating material. It is desirable that the gasket member be flexible, and preferably resilient, in order to aid in achieving leak-tight seals in the electrolytic cell.

The gasket 10 of the present invention should exhibit a high degree of resistance to corrosion by a variety of different electrolytes and products of electrolysis. However, the gasket member should show particular resistance to corrosion when the electrolyte which is electrolyzed is an aqueous solution of an alkali metal chloride, for example, an aqueous solution of sodium chloride. An aqueous solution of alkali metal chloride may be electrolyzed in a cell which comprises a separator between each anode and adjacent cathode. The gasket member should be resistant to wet chlorine produced during operation of such a cell.

The hardness of the gasket 10 is not critical and any suitable hardness offering resiliency can be selected for the gasket member. Preferably, the gasket has a low degree of hardness which allows the gaskets to fill in irregularities in the frame members and thus permit reduced tolerances which minimizes, for example, machining of metal cell frame members and thus reduces production costs. For example, a gasket having a Type A Shore Durometer Scale hardness in the range of 50 to 90 is suitable.

The gasket 10 of the present invention may be used in any suitable filter press type electrolysis cell, the structure and function of its central components being well known to one of skill in the art. For example, an electrolytic cell of the filter press type comprising any number of alternating anodes and cathodes may be used. Electrolytic cells of the aforementioned types are used on a large scale for the production of chlorine and caustic alkali.

The electrolytic cell in the present invention may be a monopolar or a bipolar cell, that is, the cell may comprise individual anodes and cathodes separated from each other; or the anodes and cathodes may be associated with each other in the form of bipolar electrodes. Preferred filter press electrolytic cells for employing the present invention are bipolar or monopolar membrane cells in which the electrodes are oriented generally vertically. Suitable bipolar filter press membrane electrolytic cells in which can be adapted for use of the gasket include, for example, those described in U.S. Patent No. 4,488,946. Suitable filter press monopolar membrane electrolytic cells include those described in U.S. Pat. No. 4,056,458, U.S. Pat. No. 4,210,516, and U.S. Pat. No. 4,217,199.

The cell bodies or frame members 21 and 22 have generally planar opposing surfaces such as flange surfaces 21a and 22a between which the gasket member 10 is compressed. The frames are generally of a thick solid construction capable of withstanding the considerable compression force exerted upon the frames when the filter press cell is assembled. To prevent the gasket members from "popping out" under compression, the sealing surfaces of the frames should be substantially flat. To avoid the considerable expense of machining and finishing, the opposing planar surfaces are free of other recesses or grooves. However, frames 21 and 22 may have recesses, not shown, therein for receiving a second gasket member such as O-ring members, for sealing the flange portions of the electrolytic cells.

During assembly of the filter press electrolytic cell, pressing means such as tie bolts tightened around the perimeter of the cell or hydraulic cylinders pressing against a mobile platen against the cell frame members is used. The pressing brings together the individual electrodes, anodes and cathodes, alternately arranged. An adjacent electrode pair, a cathode and an anode, are compressed together so that the gasket and the separator held are compressed between them. As the electrodes are compressed together by the application of a suitable closure force, the gasket deforms sufficiently in a manner which effects a fluid-tight seal between adjacent electrode frames, as well as securing the membrane along one side of the gasket. The pegs or pins, as described above, prevent any undesired slippage of the gasket.

### Example 1. Fabrication Of Snap-on Gasket

An aluminum mold, substantially as shown in Figure 6, having a shape suitable for fabrication of a 0.6m by 0.6m picture-frame shape gasket having a width of 3.2cm and a thickness of 0.2cm was used. The mold has 36 holes of 0.48cm diameter at 7cm centers near the outer periphery.

A first layer of a 0.54cm wide by 0.1cm thick tape of expanded, low density polytetrafluoroethylene sold under the trade name Gore-Tex™ tape was positioned in the mold. The first layer of Gore-Tex™ tape had holes pre-fabricated at the outer periphery to match with the holes in the mold. The strips of tape were overlapped at its corners to form a continuous picture-frame gasket. Plastic pins were then positioned into the holes of the tape and the holes of the mold. A 2.54 cm strip of Teflon™ scrim coated with a sulfonic polymer solution was installed on top of the first tape. A second Gore-Tex™ tape with no holes was positioned on top of the Teflon scrim. The composite gasket was then compressed between the upper and lower portions of the mold at a pressure of 100 psig (790 kPa) and the mold was heated to a temperature of 121° C for 15 minutes. The mold was allowed to cool to room temperature. The gasket was removed from the mold and was found to be a one-piece picture-frame gasket having snap-on pins protruding from one side. It had a Type A Shore Durometer hardness in the range of from 50 to 90.

### Example 2. Use Of Snap-on Gasket In Chlorine Cell

The gasket, fabricated as described above, was installed on the anode side of an electrolytic cell frame by pushing the pins into the matching holes on the anode cell flange. A similar gasket was installed on the cathode side of another cell frame. No adhesive or glue was used to attach the gaskets to the cell frame flanges. A sheet of membrane was installed between the anode gasket of the first cell frame and the cathode gasket of the second cell frame, thus forming an electrolytic cell. The cell frames were then compressed at a pressure of 2100 kPa. Anolyte and catholyte were circulated through the cell and power was turned on. The cell was operated at 16.77 amps/cm², 90°C and 104 kPa of internal pressure without leakage of electrolyte. After one week in operation, the cell was shut down and disassembled. Both anode and cathode gaskets stayed in place on the gasket flanges and remained flat, with uniform width all around. No gasket displacement towards the inside or outside of the cell was observed. Also, no visible damage of the membrane due to gasket deformation or displacement was observed.

### Example 3.

A pilot plant size electrolyzer with nine 1.524m by 3.658m membrane cell frames was gasketed with snap-on rubber gaskets having projecting pegs or pins on the side against the cell frame flange. The sealing material of both anode and cathode gaskets were made of ethylene-propylene-diene ruber compound (EPDM) having a Type A Shore Durometer Scale Hardness of 70 and a compression set of approximately 10%. The gaskets were 3.175cm wide and 0.16cm thick. The gaskets had 0.48cm cylindrical projections with conical tips at 7cm centers. The gaskets were installed on the anode and cathode cell flanges by pushing the gasket projections or pins into the holes which were prefabricated on the periphery of the cell flanges. No adhesive was used to attached the gaskets to the cell flanges. The gasketed cell frames were installed on a cell skid between the two platens on a hydraulic squeezer. A membrane was inserted between each anode and cathode. The cell frames were then compressed together at a pressure of about 2068 kPa on the gasket. Anolyte and catholyte were then added and the power turned on to energize the electrolyzer. The cells were operated at 90°C and 103 kPa of internal pressure for 2 weeks without any leak or gasket slippage. After shutdown the cells were opened up for inspection. The gaskets were still flat and straight without any displacement on the cell flanges.

## Claims

1. A gasket for sealing adjacent flat members of an electrolytic cell, at least one of the flat members being a cell separator and the other being a cell frame member, or a liner for the cell frame member, the gasket comprising a one-piece laminated structure of a picture frame configuration, having at least two layers of a polymeric sealing material, or an elastomeric sealing material, and a reinforcing scrim material interposed therebetween, and a plurality of pointed pegs or pins projecting in a direction generally normal from the gasket structure for mating with holes in the cell frame member or the cell frame liner.

2. The gasket of Claim 1 wherein the reinforcing scrim is adhered to with an adhesive to the two layers of the polymeric sealing material.

3. The gasket of Claim 1 or 2, wherein the gasket has a thickness of from 1.5mm to 25mm, a Type A Shore Durometer scale hardness in the range of from 50 to 90, and wherein the projecting pointed pegs are spaced apart by a distance from 25cm to 2.5cm.

4. The gasket of Claim 1, 2 or 3 wherein the projecting pegs or pins on the gasket are made of rigid plastic.

5. An electrolysis cell assembly comprising at least a pair of adjacent electrolytic cell frame members, a separator interposed between the electrode frame members, at least one cell frame member having recesses for receiving projections; and at least one laminated, reinforced gasket comprising a solid structure in picture frame configuration said gasket comprising at least two layers of a polymeric material or an elastomeric material adhered to a scrim laminated between them, and a plurality of projecting pointed pegs extending in a direction generally normal to said solid body, with the pegs or pins mating with the recesses of the cell frame member.

6. The cell assembly of claim 5, including at least a second gasket interposed between one side of the separator and one of the electrode frame members, thereby positioning each separator between two gaskets, with both gaskets mated by the pegs or pins to two different cell frame members.

7. The assembly of Claims 5 or 6, including at least a pair of liner members adjacent the frame members for lining the frame members,
the liners having an outwardly extending portion a predetermined distance beyond said outer periphery of said frame members, the extended portion having recesses and/or holes for receiving said pointed pegs or pins.

8. The cell assembly of Claim 7, including an insulation member positioned around the peripheral outer surface of the frame members and being held in place by the pegs or pins protruding through holes in the liners into holes in the insulation.

9. The cell assembly of any one of Claims 5 to 8, wherein the pegs or pins comprise a material which is more rigid than that which comprises the sealing material.

## Patentansprüche

1. Dichtung zum Abdichten von benachbarten flachen Elementen einer elektrolytischen Zelle, wobei mindestens eines der flachen Elemente ein Zellseparator ist und das andere ein Zellrahmenelement oder eine Einlage für das Zellrahmenelement ist, wobei die Dichtung eine einstückige laminierte Struktur in einer Bilderrahmenkonfiguration umfaßt, mindestens zwei Schichten eines polymeren Dichtungsmaterials oder eines elastomeren Dichtungsmaterials und ein dazwischen angeordnetes Scrimmaterial und eine Vielzahl von spitzen Zapfen oder Stiften aufweist, die in einer generell senkrechten Richtung aus der Dichtungsstruktur hervorstehen, um mit Löchern im Zellrahmenelement oder in der Zellrahmeneinlage zusammenzupassen.

2. Dichtung nach Anspruch 1, worin das Verstärkungsscrim mit einem Haftmittel an den zwei Schichten des polymeren Dichtungsmaterials befestigt ist.

3. Dichtung nach Anspruch 1 oder 2, worin die Dichtung eine Dicke von 1,5 mm bis 25 mm, eine Härte auf der Typ A Shore Durometer-Skala im Bereich von 50 bis 90 hat und worin die hervorstehenden spitzen Zapfen durch einen Abstand von 25 cm bis 2,5 cm getrennt sind.

4. Dichtung nach Anspruch 1, 2 oder 3, worin die hervorstehenden Zapfen oder Stifte auf der Dichtung aus Hartplastik gefertigt sind.

5. Elektrolysezellanordnung, umfassend mindestens ein Paar benachbarter elektrolytischer Zellrahmenelemente, einen zwischen den Elektrodenrahmenelementen angeordneten Separator, mindestens ein Zellrahmenelement mit Ausnehmungen zur Aufnahme von Vorsprüngen und mindestens eine laminierte, verstärkte Dichtung, die eine feste Struktur in Bilderrahmenkonfiguration umfaßt, wobei die Dichtung mindestens zwei Schichten eines Polymermaterials oder eines Elastomermaterials befestigt an einem zwischen ihnen laminierten Scrim und eine Vielzahl von hervorstehenden spitzen Zapfen umfaßt, die sich in einer generell senkrechten Richtung zum festen Körper erstrecken, wobei die Zapfen oder Stifte mit den Ausnehmungen des Zellrahmenelements zusammenpassen.

6. Zellanordnung nach Anspruch 5, die mindestens eine zweite Dichtung umfaßt, die zwischen einer Seite des Separators und einem der Elektrodenrahmenelemente angeordnet ist, wodurch jeder Separator zwischen zwei Dichtungen angeordnet wird, so daß beide Dichtungen durch die Zapfen oder Stifte mit zwei verschiedenen Zellrahmenelementen zusammengepaßt sind.

7. Anordnung nach Anspruch 5 oder 6, die mindestens ein Paar Einlageelemente benachbart zu den Rahmenelementen enthält, um die Rahmenelemente auszukleiden,
wobei die Einlagen einen nach außen herausragenden Abschnitt eine vorbestimmte Entfernung jenseits des äußeren Umfangs der Rahmenlemente aufweisen, wobei der herausragende Abschnitt Ausnehmungen und/oder Löcher zur Aufnahme der spitzen Zapfen oder Stifte besitzt.

8. Zellanordnung nach Anspruch 7, die ein um die periphere Außenfläche der Rahmenelemente herum angeordnetes Isolierelement umfaßt, das durch die Zapfen oder Stifte in Position gehalten wird, die durch Löcher in den Einlagen bis in Löcher in der Isolierung vorstehen.

9. Zellanordnung nach einem der Ansprüche 5 bis 8, worin die Zapfen oder Stifte ein Material enthalten, das härter als dasjenige ist, welches das Dichtungsmaterial bildet.

## Revendications

1. Joint de montage étanche d'éléments plats adjacents d'une cellule électrolytique, au moins l'un des éléments plats étant un séparateur de cellule et l'autre étant un élément de châssis de cellule, ou un chemisage de l'élément de châssis de cellule, le joint comprenant une structure stratifiée d'un seul tenant à configuration d'encadrement, pourvue d'au moins deux couches d'une matière polymère d'étanchéité, ou d'une matière élastomère d'étanchéité, et d'un matériau formant un canevas de renforcement interposé entre elles, et une série de chevilles ou broches pointues en saillie dans une direction généralement normale à la structure de joint pour être en concordance avec des trous prévus dans l'élément de châssis de cellule ou le chemisage de l'élément de cellule.

2. Joint selon la revendication 1, dans lequel on fait adhérer le canevas de renforcement au moyen d'un adhésif sur les deux couches de la matière polymère d'étanchéité.

3. Joint selon l'une des revendications 1 ou 2, dans lequel l'épaisseur du joint est comprise entre 1,5 mm et 25 mm, sa dureté sur l'échelle du Duromètre Shore de Type A est dans la plage de 50 à 90, et dans lequel les chevilles pointues en saillie sont espacées d'une distance comprise entre 25cm et 2,5 cm.

4. Joint selon l'une des revendications 1 à 3, dans lequel les chevilles ou broches en saillie sont en matière plastique rigide.

5. Ensemble de cellule d'électrolyse comprenant au moins une paire d'éléments adjacents de châssis de cellule électrolytique, un séparateur interposé entre les éléments de châssis d'électrodes, des évidements étant ménagés dans au moins un élément de châssis de cellule pour recevoir des saillies; et au moins un joint stratifié renforcé comprenant une structure solide à configuration d'encadrement, ledit joint comprenant au moins deux couches d'une matière polymère ou d'une matière élastomère que l'on a fait adhérer à un canevas laminé entre elles, et une série de chevilles ou broches pointues en saillie dans une direction généralement normale audit corps solide, les chevilles ou les broches étant en concordance avec les évidements de l'élément de châssis de cellule.

6. Ensemble de cellule selon la revendication 5, incluant au moins un deuxième joint interposé entre un côté du séparateur et l'un des éléments de châssis d'électrode, en positionnant ainsi chaque séparateur entre deux joints, les deux joints s'adaptant par l'effet des chevilles ou des broches avec deux éléments différents de châssis de cellule.

7. Ensemble de cellule l'une des revendications 5 ou 6, incluant au moins une paire d'éléments de chemisage adjacents aux éléments de châssis pour chemiser les éléments de châssis,
les chemisages comprenant une partie constituant une extension vers l'extérieur, à une distance prédéterminée au-delà de ladite périphérie extérieure, desdits éléments de châssis, des évidements et/ou des trous étant ménagés dans la partie constituant une extension pour recevoir lesdites chevilles ou broches pointues.

8. Ensemble de cellule selon la revendication 7, incluant un élément isolant qui est positionné autour de la surface périphérique extérieure des éléments de châssis et est maintenu en place par les chevilles ou les broches; qui font saillie, en traversant des trous ménagés dans les chemisages, dans des trous de l'isolant.

9. Ensemble de cellule selon l'une quelconque des revendications 5 à 8, dans lequel les chevilles et les broches comprennent une matière qui est plus rigide que celle qui est comprise dans la matière d'étanchéité.
